# EUROPÄISCHE PATENTSCHRIFT

(11) **EP 2 695 044 B1**
(45) Veröffentlichungstag und Bekanntmachung des Hinweises auf die Patenterteilung: **01.06.2022**
(21) Anmeldenummer: 12720785.0
(22) Anmeldetag: 02.04.2012
(51) Int. Cl.: G06F 3/044, G06F 3/041, G02F 1/133

(54) **BERÜHRUNGSEMPFINDLICHER BILDSCHIRM**
TOUCHSCREEN
ECRAN TACTILE

(30) Priorität: 01.04.2011 DE 102011015806
(43) Veröffentlichungstag der Anmeldung: 12.02.2014
(73) Patentinhaber: Microchip Technology Germany GmbH, 85737 Ismaning (DE); Ivanov, Artem, 82205 Gilching (DE); Heim, Axel, 80687 München (DE); Kandiziora, Thomas, 86947 Schwabhausen (DE)
(72) Erfinder: IVANOV, Artem, 82205 Gilching (DE); HEIM, Axel, 80687 München (DE); KANDIZIORA, Thomas, 86947 Schwabhausen (DE)
(74) Vertreter: sgb europe
(86) Internationale Anmeldenummer: PCT/EP2012/001454
(87) Internationale Veröffentlichungsnummer: WO 2012/130476

(56) Entgegenhaltungen:
- US-A1- 2010 110 041
- US-B1- 6 239 788

## Beschreibung

Die Erfindung richtet sich auf eine Displayeinrichtung zur Visualisierung von Bild- und Textinformationen im Rahmen einer im Zusammenspiel mit jener Displayeinrichtung interaktionsoffen abgewickelten Gerätenutzung. Insbesondere richtet sich die Erfindung hierbei auf eine spezielle Komponente jener Displayeinrichtung durch welche der Displayeinrichtung eine Touchscreenfunktionalität verliehen wird.

### Hintergrund der Erfindung

Displayeinrichtungen mit Touchscreenfunktionalität finden insbesondere bei mobilen Kommunikationsgeräten, Tablet-PC's und Navigationsgeräten Anwendung und bilden dabei eine Schnittstelle die es einem Anwender ermöglicht, durch eine selektive Berührung der Displayeinrichtung Eingabeoperationen vorzunehmen, wobei diese Eingabeoperationen typischerweise durch eine seitens der Displayeinrichtung visualisierte Benutzeroberfläche begleitet werden.

Auch bei klassischen Displaysystem wie beispielsweise Computerbildschirmen kann eine implementierte Touchscreenfunktion attraktive Interaktionsmöglichkeiten bieten, um hierdurch beispielsweise Menuepunktselektionen, Cursorsteuerungen, oder Bildbewegungen wie z.B. das Drehen von auf dem Displaysystem dargestellten 3D-Objekten zu koordinieren.

Aus der US Patentanmeldungs-Veröffentlichung US 2010/0110041 ist eine organische Licht emittierende Anzeigevorrichtung mit kapazitiver "Touch panel"-Funktion bekannt. Aus dem US Patent US 6,239,788 ist ein Koordinaten-Eingabevorrichtung und ein Display mit integrierter Koordinaten-Eingabevorrichtung bekannt, welches eine direkte elektrostatische Kopplungskapazität mit hoher Genauigkeit detektieren kann.

Aus mehreren auf die Anmelderin zurückgehenden Patentanmeldungen, insbesondere aus der DE 10 2009 030 495 A1 ist es bekannt, eine Displayeinrichtung so zu gestalten, dass diese neben einer Touchscreenfunktion auch die Erfassung des Fingers eines Anwenders ermöglicht, bevor dieser die Displayeinrichtung berührt. Um neben der Berührung des Displays auch die Position eines Finger in einem der Displayeinrichtung vorgelagerten Bereich zu ermöglichen, sind zusätzlich zu dem der Berührungserfassung dienenden Elektrodensystem auch spezielle separate Elektroden vorgesehen, die es ermöglichen, Änderungen der elektrischen Eigenschaften oder Zustände in einem der Displayeinrichtung vorgelagerten Bereich zu erfassen und hieraus Signale abzuleiten die eine relativ hochauflösende Positionserfassung des Fingers eines Anwenders ermöglichen. Die der Berührungserfassung dienenden Elektroden und die hiervon separat vorgesehenen Elektroden zur berührungslosen Positionserfassung können durch eine Zeitmultiplexereinrichtung abfolgend aktiviert werden.

### Aufgabe der Erfindung

Der Erfindung liegt die Aufgabe zugrunde, eine Displayeinrichtung zu schaffen, die sowohl die Erfassung von Berührungspositionen (Touch-Modus) als auch die berührungslose Erfassung von Positionen des Fingers eines Anwenders in einem der Displayeinrichtung vorgelagerten Bereich (Non-Touch-Modus) ermöglicht, wobei sich diese Displayeinrichtung durch einen robusten und kostengünstig realisierbaren Aufbau auszeichnen soll.

### Erfindungsgemäße Lösung

Die vorangehend genannte Aufgabe wird erfindungsgemäß gelöst durch eine Displayeinrichtung gemäß Anspruch 1 und durch ein Verfahren gemäß Anspruch 14. Vorteilhafte Ausführungsformen sind in den abhängigen Ansprüchen aufgeführt.

Dadurch wird es auf vorteilhafte Weise möglich, die im Bereich der Displayeinrichtung vorgesehenen, der Berührungserfassung dienenden Elektrodensegmente als Elektrodensystem zu betreiben über welches eine Detektion der Position oder Bewegung eines Fingers des Anwenders abgewickelt werden kann, bevor dieser die Displayeinrichtung berührt. Sobald eine Berührung der Displayeinrichtung erfolgt, kann über unmittelbar benachbarte Elektrodensegmente bzw. benachbarte Elektrodensegmente von einander sich kreuzenden Zeilen und Spalten eine Positionsanalyse im Touch-Modus vorgenommen werden. Die Elektrodengruppe umfasst vorzugsweise Elektrodensegmente die in der Displayeinrichtung eine gestreckte Kette bilden. Die zur Detektion der Fingerposition im Non-Touch-Modus herangezogenen Ketten erstrecken sich vorzugsweise relativ nahe entlang des Randbereiches der Displayeinrichtung. Die zur Positions- oder Bewegungserfassung temporär als Sensorelektrodensysteme betriebenen Segmentketten können zueinander verschiedene Ausrichtungen aufweisen, insbesondere zueinander parallel ausgerichtet und voneinander beabstandet sein. In die Positionsbestimmung können auch Auswertungsergebnisse einfließen die auf Detektionsereignissen beruhen welche aus zueinander quer verlaufenden, insbesondere zueinander senkrecht stehenden Elektrodensegmentketten erhoben wurden.

Die Detektion der Position eines Fingers bei Berührung der Displayeinrichtung kann erfolgen, indem die feldelektrische Koppelung zweier unmittelbar benachbarter Elektrodensegmente erfasst und bewertet wird. Um diese kurze feldelektrische Zusammenkoppelung der benachbarten Elektrodensegmente zu detektieren ist das Segmentarray vorzugsweise so aufgebaut, dass eine erste Teilmenge der Elektrodensegmente zu separaten Segmentzeilen und eine zweite Teilmenge zu wiederum jeweils separaten Segmentspalten zusammengefasst sind. Die Segmentzeilen und die Segmentspalten sind gegeneinander isoliert. Die Verbindungsstege zwischen abfolgenden Elektrodensegmenten der jeweiligen Elektrodensegmentzeile sind gegenüber den Verbindungsstegen der abfolgenden Elektrodensegmente der Segmentspalten isoliert. Die entsprechenden Kreuzungspunkte sind als isolierende Brücken ausgebildet durch welche eine galvanische Verbindung dieser Verbindungsstege in dem Überquerungsabschnitt vermieden wird. Das Elektrodenarray ist vorzugsweise in der Art eines Feldes mit eng benachbarten Rauten, Sechsecken, Polygonen, oder anderweitigen engmaschig benachbarten Parzellen gebildet. Neben einem Elektrodensegment das Bestandteil einer Segmentspalte bildet befindet sich damit in unmittelbarer Nachbarschaft ein Elektrodensegment das Bestandteil einer Segmentzeile bildet. Der Berührungspunkt des Displays entspricht damit dem Kreuzungspunkt derjenigen Segmentzeile und derjenigen Segmentspalte der die höchste kapazitive Koppelung bewirkt. Im Berührungserfassungsmodus erfolgt somit die Bestimmung der X- und Y- Positionen durch Erfassung der Kreuzungspunkte mit hoher kapazitiver Koppelung. Die Berührungsposition im Touch-Modus kann weiterhin auch erfasst werden, indem ermittelt wird, welche Segmentzeile und welche Segmentspalte die höchste kapazitive Koppelung mit dem Finger des Anwenders haben. Die Berührposition entspricht dann dem Kreuzungspunkt dieser Segmentzeile mit jener Segmentspalte. Im Non-Touchmodus hingegen erfolgt die Bestimmung der X- und Y- Positionen indem für die kapazitive Koppelung mehrerer Segmentspalten und mehrerer Segmentzeilen entsprechende, positionsabhängige Signalpegel erfasst werden, die indikativ sind für den Abstand des Fingers von der entsprechenden Segmentzeile und der entsprechenden Segmentspalte. Aus diesen Pegelwerten kann dann die Fingerposition errechnet werden, oder zumindest der Bewegungsverlauf des Fingers beschrieben werden. Diese Berechnung erfolgt vorzugsweise unter Abarbeitung mehrerer, vorzugsweise untereinander gewichteter Ansätze, beispielsweise von Triangulations- und Trilaterationsansätzen die auf verschiedene Elektrodensegmentgruppen und Gruppenkombinationen abgestimmt sind. Über die Segmentzeilen und Segmentspalten wird zunächst die kapazitive Koppelung gegen Ground, oder eine anderweitige Spannungseinkoppelung als analoger Pegel ermittelt. Dieser analoge Pegel wird dann über ein ADC-System konvertiert und einer digitalen Datenverarbeitung unterzogen.

Bei einer besonders bevorzugten Ausführungsform der Erfindung erfolgt bei einer im wesentlichen rechteckigen Displayeinrichtung die Positions- oder Bewegungsbestimmung im Non-Touchmodus unter Verwendung der randnahen Segmentzeilen und Segmentspalten. Diese randnahen Segmentzeilen und Segmentspalten bilden dabei einen Elektrodenrahmen. Dieser Elektrodenrahmen ermöglicht es die X-Position des Fingers eines Anwenders durch Auswertung der durch den Finger beeinflussten kapazitiven Koppelung der randnahen Segmentspalten gegen Ground zu ermitteln. Die Y-Position des Fingers kann anhand der durch den Finger beeinflussten kapazitiven Koppelung der oberen und der unteren horizontalen Segmentzeile gegen Ground ermittelt werden. Das Gegenpotential gegen Ground wird vorzugsweise an eine transparente Elektrodenschicht angelegt die sich im wesentlichen vollflächig auf einer dem Anwender abgewandten Rückseite des Scheibenlayers, d.h. auf der dem Anwender abgewandten Rückseite des Elektrodensegmentarrays erstreckt.

Vorzugsweise wird die Umschaltung zwischen einem ersten Schaltungszustand und einem zweiten Schaltungszustand durch eine Multiplexereinrichtung bewerkstelligt. Diese Multiplexereinrichtung kann als Zeitmultiplexereinrichtung ausgeführt werden die eine bestimmte Zeitphase für den Non-Touch-Modus und eine bestimmte Zeitphase für den Touch-Modus vorsieht. Ggf. können auch programmgesteuert bestimmte Gruppen von Elektrodensegmenten fortlaufend als Elektrodensegmentketten für die Positions- und Bewegungserfassung im Non-Touch-Modus herangezogen werden und parallel hierzu bestimmte Elektrodensegmentketten für eine zweidimensionale Positionserfassung im Touchmodus herangezogen werden. Die Benutzeroberfläche ist dann vorzugsweise so gestaltet, dass diese für jene Bereiche deren Elektrodensegmentketten zur Non-Touch-Positionsbestimmung herangezogen werden keine Touchdetektionsfunktion erfordert.

Touch-Detektionsmodus und Non-Touch-Detektionsmodus können durch schaltungstechnische Maßnahmen in zeitlicher Abfolge herbeigeführt werden, oder simultan präsent sein. Bei abfolgender Aktivierung kann anstelle einer starren Festlegung der Zeitdauer des jeweiligen Modus, der Wechsel zwischen dem jeweiligen Modus so abgestimmt werden, dass z.B. der Taktanteil für die Einnahme des zweiten Betriebszustands (des Non-Touch-Modus) auf Null gesetzt, oder reduziert wird, solange eine Berührung detektiert wird. Eine Berührung wird vorzugsweise erkannt, wenn die kapazitive Koppelung einer Elektrodensegmentzeile und einer Elektrodensegmentspalte miteinander, oder jeweils gegen Ground einen bestimmten Grenzwert überschreitet. Durch die Unterdrückung des Non-Touch Analysemodus kann die Signalverarbeitung vereinfacht werden, da die Signalauswertung im Touchmodus mit geringerer Sensibilität und einfacheren Auswertungsoperationen abgewickelt werden kann, als im Non-Touchmodus. Analog hierzu wird in vorteilhafter Weise der Taktanteil für die Einnahme des ersten Betriebszustands reduziert, solange keine Berührung detektiert wird. Da der Berührungsvorgang besonders zuverlässig erkannt werden kann, wird vorzugsweise jedoch selbst dann, wenn z.B. keine ein berührungsindikatives Grenzwertkriterium erfüllende Annäherung erkannt wird in bestimmten, jedoch vorzugsweise relativ großen Zeitabständen eine Berührungsdetektion durchgeführt um hierdurch einen Funktionssicherheitsgewinn zu erreichen.

Der Non-Toch-Modus kann in vorteilhafter Weise in zumindest zwei Sub-Modi untergliedert werden. Der erste Sub-Modus ist ein Large-Distance-Modus. In diesem wird z.B. nur eine Wake-UP-Funktion und eine grobe Erfassung eines Z-Achsen Abstandes (Abstand im wesentlichen senkrecht zum Display) durchgeführt. Erst bei Unterschreiten eines Mindestabstands in Z-Richtung erfolgt die Abarbeitung eines zweiten Sub-Modus. In diesem erfolgt eine sensiblere Positionsbestimmung durch Auswertung der Koppelung der durch die Elektrodensegmente gebildeten Elektrodengruppe gegen Ground oder Auswertung eines in diese Elektrodengruppe eingekoppelten Feldes. Der Grenzabstand bei dessen Unterschreiten eine Erfassung der X-, Y-, und Z- Position erfolgt entspricht beispielsweise einem Abstand bei welchem die randnahen Segmentzeilen und Segmentspalten bereits eine hinreichend genaue Positionsbestimmung ermöglichen. Diese Voraussetzungen sind gemäß experimenteller Untersuchung regelmäßig gegeben, wenn der Abstand des Fingers vom Display kleiner ist als etwa 2/3 der Displaydiagonalen.

Im Rahmen des zweiten Schaltzustandes, können bei Unterschreiten eines Mindestabstands verschiedene Elektrodensegmentgruppen sukzessive aktiviert werden. Die zur Positionserfassung im Non-Touch-Modus herangezogenen Elektrodensegmentzeilen und Elektrodensegmentspalten können damit im Display "wandern" und dabei für die jeweilige Fingerposition optimale Detektionspositionen einnehmen. Es können auch mehrere Elektrodensegmentzeilen und Elektrodensegmentspalten gleichzeitig aktiviert und ausgewertet werden. Die gleichzeitig aktivierten Elektrodensegmentgruppen können dabei voneinander beabstandete Zeilen bzw. Spalten, oder auch zueinander quer verlaufende Zeilen und Spalten sein. Für mittlere Abstände, d.h. Abstände von 25 bis 50% der Displaydiagonalen kann die Fingerposition durch Triangulatation und Trilateration, insbesondere durch Auswertung der analogen Signalpegel der randnahen Segmentzeilen und Segmentspalten ermittelt werden. Bei weiterer Annäherung kann die Fingerposition als Kreuzungspunkt derjenigen Segmentspalte und Segmentzeile mit der höchsten kapazitiven Koppelung gegen Ground, oder anderweitig signifikanten Potentialpegeln ermittelt werden. Der Z-Abstand kann dann aus dem jeweiligen Pegel der kapazitiven Koppelung gegen Ground, bzw. dem Potentialpegel ermittelt werden. Das Kreuzungspunktkonzept und das Trilaterationskonzept können auch miteinander verknüpft, insbesondere gewichtet verknüpft zur Positionsbestimmung herangezogen werden.

Vorzugsweise wird im zweiten Schaltzustand, d.h. dem Non-Touch-Modus eine erste Elektrodengruppe aktiviert, die eine obere randnahe horizontale Segmentkette darstellt und eine zweite Elektrodengruppe aktiviert, die eine untere randnahe horizontale Segmentkette darstellt. Durch diese beiden Elektrodensegmentgruppen kann dann die zwischen diesen horizontalen Grenzen liegende Y-Position des Fingers errechnet werden.

Zur Erfassung der X-Position im zweiten Schaltzustand (Non-Touch-Modus) werden vorzugsweise Elektrodengruppen herangezogen, die eine linke randnahe vertikale Segmentkette und eine rechte randnahe vertikale Segmentkette darstellen.

Weiterhin ist es möglich, sukzessive wechselnde Elektrodengruppen zur Erfassung der Fingerpositionen heranzuziehen, so dass beispielsweise die jeweils ausgewerteten Elektrodensegmentgruppen in der Art einer adaptiv durchgeschalteten, beispielsweise vertikal wandernden Zeile oder horizontal wandernden Spalte über die Displayeinrichtung laufen.

Weiterhin können die Pegelwerte von zueinander quer, insbesondere zueinander in etwa senkrecht verlaufenden Elektrodensegmentketten durch entsprechende Auswertungskonzepte ausgewertet werden.

Die Erfassung der X-, Y-, und Z- Informationen erfolgt vorzugsweise indem wie bereits angesprochen im Rahmen des zweiten Schaltzustandes (Non-Touch-Modus) Elektrodengruppen gebildet werden und die Koppelung dieser Elektrodengruppen gegen Erde erfasst wird. Diese jeweilige Koppelung korreliert eng mit dem Abstand des Fingers von der jeweiligen Elektrodengruppe. Aus den jeweiligen Koppelungswerten gegen Erde, oder anhand einer anderweitigen, durch den Finger des Anwenders verursachten und mit dem Fingerabstand korrelierenden Potentialankoppelung kann dann der Abstand von der jeweiligen Elektrodengruppe ermittelt und die Position des Fingers aus den verschiedenen Abstandsinformationen erfasst werden.

Beispielhaft kann die Auswertungsschaltung als ASIC ausgeführt werden und in unmittelbarer Nähe des Scheibenlayers der Displayeinrichtung angeordnet sein. Die Anbindung der Auswertungsschaltung an die diskreten Leiterbahnen der Elektrodensegmente kann beispielsweise durch eine flexible Leiterbahn, durch Klemmkontaktstrukturen (z.B. "Zebrastreifen") oder auch durch direkte Anordnung des ASIC's auf dem Scheibenlayer erfolgen. Die auf dem Scheibenlayer angeordneten Elektrodensegmente sind über Leitungsabschnitte mit dem ASIC verbunden. Bereits im Bereich des Scheibenlayers können vertikal und horizontal abfolgende Elektrodensegmente zu Elektrodenzeilen und Elektrodenspalten zusammengefasst sein, wobei diese Spalten und Zeilen gegeneinander isoliert und jeweils für sich als Elektrodensegmentgruppe an den ASIC oder einen Multiplexer angeschlossen sind.

Vorzugsweise sind die Elektrodensegmente als Kreisscheiben, als Rauten, Sechsecke, Achtecke, Mondsichelstrukturen oder eng benachbarte anderweitige Polygone ausgeführt, oder weisen teils ineinandergreifende Geometrien (z.B. sog. Knochen- oder Pflastersteinkontur) auf. Bei der Ausführung als entsprechende Segmente, insbesondere Rauten können Rautenketten gebildet werden. Ein Teil der Rauten wird zur Bildung horizontaler Rautenketten verwendet, der weitere Teil der Rauten wird zur Bildung vertikaler Rautenketten verwendet. Zwischen den Elektrodensegmenten verlaufen schmale Trenngassen die einen galvanischen Kontakt der Segmente einer Elektrodensegmentzeile mit den Elektrodensegmenten der kreuzenden Elektrodensegmentspalten verhindern. Die Elektrodensegmente sind also eng aneinander gedrängt ausgebildet, wobei nur die Elektrodesegmente die eine zeilen- oder spaltenartige Kette bilden miteinander leitend verbunden sind.

Der ASIC ist intern vorzugsweise derart aufgebaut, dass dieser die Beschaltung der Elektrodensegmentzeilen und Elektrodensegmentspalten derart einstellt, dass diese sowohl zur Abarbeitung des Touch-Modus als auch zur Abarbeitung des Non-Touch-Modus entsprechend herangezogen werden können. Vorzugsweise ist in dem ASIC eine Einstellmöglichkeit vorgesehen die es ermöglicht, bestimmte Systemeigenschaften der Elektrodengruppen, sowie Übergangsphänomene beim Wechsel zwischen den Arbeitsmodi oder der Änderung des Gruppenaufbaus so zu berücksichtigen, dass diese werden.

Insbesondere für einhändig zu ergreifende Geräte wie z.B. Mobiltelefone ist es möglich, im Rahmen der Signalverarbeitung eine Kalibrierroutine abzuarbeiten durch welche zunächst eine durch den Geräteaufgriff verursachte Feldbeeinflussung zumindest weitgehend kompensiert wird. Die Gestenerfassung im Non-Touch-Modus kann zunächst eine bestimmte Geste, z.B. eine Bewegung der Fingerspitze entlang einer imaginären Kreisbahn im Uhrzeigersinn erfordern die in einem Abstand von etwa 66% der Displaydiagonalen vor dem Display durchgeführt wird. Mit dieser speziellen Geste kann der Non-Touch-Detektionsmodus aktiviert und zudem eine Kalibrierung der Sensorik durchgeführt werden.

Vorzugsweise wird über die Benutzeroberfläche eine mit der erfassten Position korrelierende Anzeige abgewickelt. Das Übergleiten bestimmter Fenster oder Menuepunkte in der grafischen Benutzeroberfläche kann akustisch, und vorzugsweise auch über eine mechanische Feedbackeinrichtung, z.B. elektromagnetisch verlagertes Masseelement haptisch vermittelt werden.

Soweit eine Annäherung des Fingers auch mit einem Aufsetzen auf das Display verbunden ist, können die in der Non-Touch-Annäherungsphase bestimmten Positionen mit der dann im Touch-Modus erfassten Berührungsposition verglichen werden. Anhand einer implementierten, internen Kalibrierprozedur können anhand der zunächst die Non-Touch-Phase erhobenen Informationen und anhand der im Touch-Modus extrem sicher erhobenen Positionsinformationen die Auswertungsparameter für nachfolgende Detektionsvorgänge adaptiert werden. Gleiches gilt auch für das Abheben des Fingers von der Displayeinrichtung. Hier kann anhand der letzen eindeutig bestimmten Berührungsposition für die Positionsbestimmung im Non-Touch-Modus eine automatische interne Feinjustierung durch entsprechende Modifikation interner Parameter bewerkstelligt werden.

Insbesondere bei relativ kleinformatigen Touchscreens kann die Positionserfassung so abgewickelt werden, dass bei größerem Fingerabstand von der Displayeinrichtung der Detektionsbereich zur Erfassung der Fingerposition größere Abmessungen hat als die Displayeinrichtung.

Die Verarbeitung der X- und Y- Positionen kann insbesondere in Y-Richtung derart erfolgen, dass hier ein Offset generiert wird, der dazu führt, dass der momentan im Display positionierte Cursor, oder der ausgewählte Menuepunkt nicht vom Finger des Anwenders verdeckt wird.

Unter Displayberührung ist im Kontext der vorliegenden Beschreibung ein leichtes Aufsetzen des Fingers auf eine Displayscheibe zu verstehen. Die in die Displayeinrichtung eingebundenen Elektrodensysteme werden hierbei nicht, oder zumindest nicht zwingend galvanisch kontaktiert. Der Finger sitzt insoweit auf einem isolierenden Scheiben- oder Film-, oder Folienelement auf. Typischerweise sind sämtliche in der Displayeinrichtung vorgesehenen Elektrodensysteme durch eine isolierende transparente Glas- oder Kunststoffschicht abgedeckt. Der Berührungszustand kann anhand diesbezüglich hinreichend indikativer Signalpegel erkannt werden. Der Berührungszustand und der Nicht-Berührungszustand können auch anhand besonderer, mit dem Z-Achsabstand einhergehende Dynamikmerkmale erkannt werden. So ist typischerweise beim Aufsetzen des Fingers die Z-Dynamik nahezu Null, oder repräsentiert die Abflachung der Fingerkuppe unter zunehmendem Aufsetzdruck. Dieses Phänomen kann als Selektionsindikator herangezogen werden. Auch die Z-Dynamik, bzw. bestimmte Z-Dynamikkriterien können im Non-Touchmodus als Selektionsindikator herangezogen werden. Ein Z-Dynamikkriterium kann beispielsweise so festgelegt sein, dass dieses bei einem raschen Absenken und wieder Anheben der Fingerkuppe über eine kurze, zum Display etwa senkrechte Strecke erfüllt wird. Dieses Z-Dynamikkriterium beschreibt dann einen "virtuellen Mausklick".

Die Benutzeroberfläche kann je nachdem, ob ein Touch-Mode, oder ein Non-Tochmode aktiv ist, variieren und hierbei Charakteristika aufweisen die für den jeweiligen Modus besondere Handhabungsvorteile bieten. So kann im Non-Touch-Modus ggf. eine gröbere grafische Meneuepunktgliederung, oder eine etwas trägere, oder schleppendere Cursordynamik vorgesehen sein, als im Touchmodus.

Auf Grundlage des erfindungsgemäßen Konzeptes ist es auch möglich, die jeweils quer und längs verlaufenden Elektrodensegmentketten so anzusteuern, dass durch diese eine Multipunkterkennung, insbesondere eine Erkennung von zwei Fingern ermöglicht wird. Es können hierzu beispielsweise mehrere Zonen generiert werden, die jeweils Werte für Fingerpositionen liefern. Die Aktivierung dieses Multipunktdetektionsmodus kann von der Erfüllung bestimmter Abstandskriterien, oder auch von bestimmten zunächst geforderten Bahnverläufen, d.h. Gesten abhängig sein. Im Rahmen eines Multipunktdetektionsmodus können intuitiv vorteilhaft koordinierbare Interaktionen wie beispielsweise Skalieroberationen, Rotationen von Bildinhalten und Drag and Drop Aktionen koordiniert werden, ohne dass hierbei das Display berührt wird.

Das beschriebene Konzept kann auch auf eine Touchpadkomponente angewendet werden. Dies ist nicht Teil der Erfindung wie durch die Ansprüche definiert. Die Touchpadkomponente umfasst eine Trägerlage, und eine Elektrodenschicht, die an die Trägerlage angebunden ist. Die Elektrodenschicht ist in eine Vielzahl von Elektrodensegmenten untergliedert, wobei diese Elektrodensegmente ierbei ein Segmentarray bilden das Segmentzeilen und Segmentspalten umfasst. Die Touchpadkomponente umfasst weiterhin eine Auswertungsschaltung die derart ausgebildet ist, dass diese einen Schaltungszustand einnehmen kann, in welchem über die Elektrodensegmente der Elektrodenschicht eine Berührungsdetektion abgewickelt wird. Zudem ermöglich die Auswertungsschaltung die Einnahme eines Schaltungszustandes in welchem eine berührungslose Positions- oder Bewegungserfassung eines Fingers des Anwenders in einem der Touchpadkomponente vorgelagerten Bereich abgewickelt werden kann. Die berührungslose Positions- oder Bewegungserfassung erfolgt unter Zusammenfassung mehrerer Elektrodensegmente des Segmentarrays zu einer zeilen- oder spaltenartigen Elektrodensegmentgruppe. Diese Touchpadkomponente kann konstruktiv wie vorangehend hinsichtlich der Displayeinrichtung beschrieben ausgestaltet werden. Diese Touchpadkomponente kann dazu verwendet werden um Touchpads zu realisieren die zudem auch eine berührungslose Positionserfassung ermöglichen. Derartige Touchpads können an bislang für Touchpads üblichen Einbaustellen z.B. in Notebooks verbaut werden. Die

Struktur zur kombinierten Erfassung von Fingerpositionen im Touch-Modus sowie auch im Non-Touchmodus kann auch in anderweitige Gerätschaften, insbesondere Möbel und Fahrzeuginnenausstattungen eingebunden werden um hier in einem räumlich begrenzten Bereich eine entsprechende Eingabezone, d.h. eine Eingabezone die auch Non-Touch Interaktionen ermöglicht, zu realisieren.

### Kurzbeschreibung der Figuren

Weitere Einzelheiten und Merkmale der Erfindung ergeben sich aus der nachfolgenden Beschreibung in Verbindung mit der Zeichnung. Es zeigt:
- **Figur 1**: eine Schemadarstellung zur Veranschaulichung des Aufbaues einer erfindungsgemäßen Displayeinrichtung mit arrayartig angeordneten Elektrodensegmenten die sowohl zur Berührungsdetektion, als auch zur Fingerpositionserfassung im Non-Touch Modus herangezogen werden;
- **Figur 2**: eine Querschnittdarstellung zur weiteren Veranschaulichung des Aufbaues einer erfindungsgemäßen Displayeinrichtung;
- **Figur 3**: eine Schemadarstellung zur Veranschaulichung der Bildung von zwei horizontalen und zwei vertikalen Elektrodensegmentgruppen in dem Elektrodensegmentarray die temporär als Feldelektroden zur Erfassung einer Fingerposition herangezogen werden;
- **Figur 4**: eine Schemadarstellung zur Veranschaulichung der Anbindung des Elektrodenarrays an eine Auswertungsschaltung;
- **Figur 5**: eine Skizze zur Veranschaulichung der Ermittlung einer X-Koordinate durch Trilateration der durch die linken und rechten Segmentspalten erfassten Spannungspegel;
- **Figur 6**: ein Flussdiagramm zur Erläuterung einer vereinfachten Variante des erfindungsgemäßen Positionsbestimmungsverfahrens.

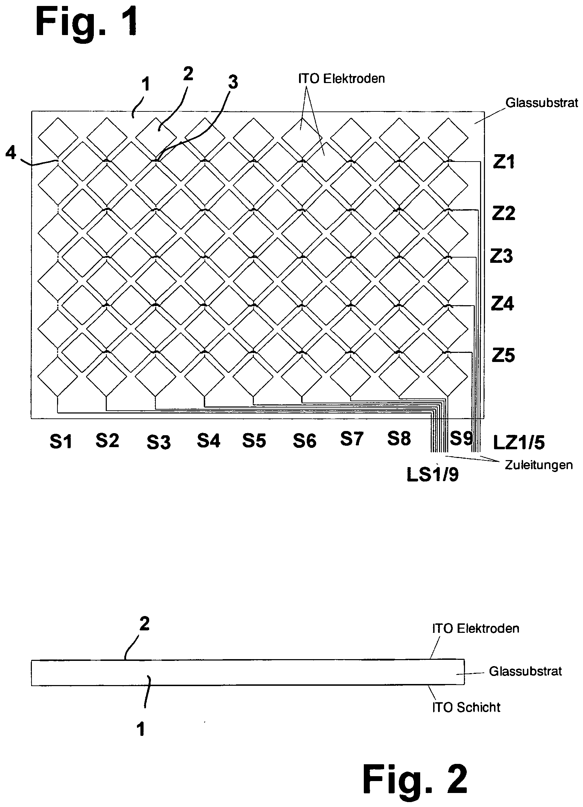

Figur 1 zeigt stark vereinfacht eine erfindungsgemäße Displayeinrichtung. Diese umfasst einen Scheibenlayer 1 der aus einem transparenten und isolierenden Material besteht. Auf diesen Scheibenlayer 1 ist eine transparente Elektrodenschicht aufgebracht, die an den Scheibenlayer 1 angebunden ist. Diese Elektrodenschicht ist in eine Vielzahl von Elektrodensegmenten 2 untergliedert. Die Gemeinschaft aller Elektrodensegmente 2 bildet das hier erkennbare Segmentarray. Dieses Segmentarray bildet Segmentzeilen Z1, Z2, Z3, Z4 und Z5, sowie Segmentspalten S1, S2 .... S9 indem die entsprechend horizontal bzw. vertikal abfolgend benachbarten Segmente 2 durch kleine Verbindungsleitungsabschnitte 3, 4 miteinander verbunden sind. Die Segmentzeilen Z1... Z5 und die Segmentspalten S1... S9 sind gegeneinander isoliert und jeweils mit einer diskret über den Scheibenlayer geführten Zuleitung LZ1/5 und LS1/9 versehen. Die Verbindungsleitungsabschnitte 3, 4 sind - sofern diese sich im Bereich des Displays kreuzen, ebenfalls gegeneinander isoliert.

Über diese Zuleitungen LZ1/5 und LS1/9 sind die Segmentspalten und Segmentzeilen mit einer Auswertungsschaltung verbunden. Diese Auswertungsschaltung ist derart ausgebildet, dass diese einen ersten Schaltungszustand einnehmen kann, in welchem über die Elektrodensegmente der Elektrodenschicht eine Berührungsdetektion abgewickelt wird, und einen zweiten Schaltungszustand einnehmen kann, in welchem die berührungslose Positionserfassung eines Fingers des Anwenders in einem der Displayeinrichtung vorgelagerten Bereich abgewickelt werden kann, wobei die berührungslose Positionserfassung unter Zusammenfassung mehrerer Elektrodensegmente 2 des Segmentarrays zu einer Elektrodengruppe, insbesondere Elektrodenzeile Z1...Z5 oder Elektrodenspalte S1...S9 erfolgt.

In Figur 2 ist der Aufbau eines Touch-Display Glases beispielhaft und stark vereinfacht dargestellt. Der Scheibenlayer 1 besteht vorzugsweise aus einem Kunststoff-, oder Glasmaterial und hat eine Dicke von beispielsweise 0,8 mm. Auf den Scheibenlayer 1 ist auf beiden Seiten jeweils eine transparente leitfähige Beschichtung (z.B. ITO-Beschichtung) vorgesehen.

Die in Einbau- und Gebrauchsposition einem Anwender zugewandte Oberseite hat eine strukturierte und dabei in eine Vielzahl von Segmenten 2 untergliederte Schicht, die hierbei in Reihen und Spalten gegliederte, eng benachbarte Segmente, z.B. Rauten aufweist. Die elektrische Kontaktierung der zu Reihen bzw. Spalten gruppierten Elektrodensegmente erfolgt über dezidierte Zuleitungen. Die Unterseite (zum Bildschirm gerichtet) ist hier durchgehend mit einer transparenten ITO-Schicht beschichtet. Der so aufgebaute Scheibenlayer 1 wird vor einem geeigneten Display angeordnet, um diesem eine an sich bekannte Touchscreen-Funktionalität zu verleihen. Die Elektrodenschichten sind durch weitere, hier nicht gezeigte isolierend transparente Lagen abgedeckt und damit insbesondere von der Seite des Anwenders her nicht direkt galvanisch kontaktierbar.

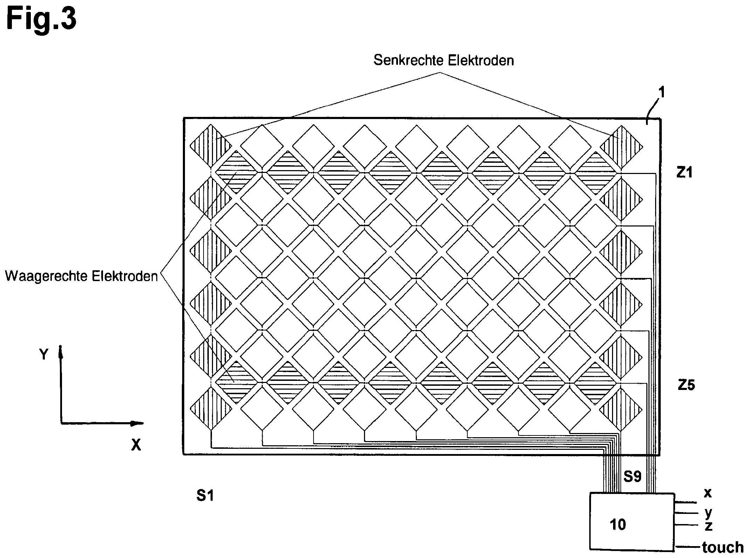

Wie in Figur 3 veranschaulicht, werden nunmehr bei dem hier gezeigten Ausführungsbeispiel in einem entsprechenden Schaltzustand, vier der randnahen Rautenstränge, d.h. die durch horizontalen Verbund von Elektrodensegmenten 2 gebildeten Segmentzeilen Z1 und Z5 sowie die durch vertikalen Verbund der randnahen Elektrodensegmente 2 gebildeten Segmentspalten S1 und S9 auf dem Glas für eine Fingerpositions- oder Fingerbewegungserfassung benutzt. Damit wird unter Nutzung der zu Zeilen und Spalten gruppierten Elektrodensegmente ein "Rahmen" mit Gestenerfassungselektroden aufgebaut.

Die obere horizontale Elektrodensegmentgruppe Z1 und die untere horizontale Elektrodensegmentgruppe Z2, sowie die beiden randnahen linken, bzw. rechten Elektrodensegmentspalten S1 und S9 die im Non-Touch-Modus zur Fingerpositionserfassung herangezogen werden sind hier durch Schraffur hervorgehoben. Die beiden horizontalen Elektrodensegmentgruppen Z1 und Z5 werden zur Erfassung einer Y-Position des Fingers eines Anwenders herangezogen. Simultan zur, oder ggf. auch unmittelbar nach der über diese beiden Elektrodensegmentgruppen Z1 und Z5 bewerkstelligten Detektion der Y-Position kann eine Auswertung erfolgen durch welche über die Elektrodensegmentspalte S1 im linken Randbereich eine linke lang gestreckte Detektionselektrode gebildet wird (linke vertikale Rautenkette) und durch Zusammenschalten der Elektrodensegmente im rechten Randbereich eine rechte Elektrodensegmentspalte S9 (rechte vertikale Rautenkette) gebildet wird. Über diese beiden Elektrodengruppen kann dann die X-Position des angenäherten Fingers ermittelt werden. Weiterhin kann aus den Messsignalen der Abstand des Fingers von der Displayeinrichtung ermittelt werden. Zur Bestimmung der X- und Y-Positionen können auch die von den zeilen- und spaltenartigen Elektrodensegmentgruppen erfassten Signalpegel auf Grundlage anderweitiger Auswertungsansätze bestimmt werden. Insbesondere können für die X- und Y-Positionsbestimmung auch zueinander quer verlaufende Elektrodensegmentgruppen herangezogen werden. Zur Bestimmung der X- und Y- Positionen können verschiedene Auswertungsansätze gewichtet kumuliert herangezogen werden.

In einem Gerät das mit einem entsprechenden Display ausgestattet ist, kann die Positionierung der Hand oder eines Fingers ab Unterschreiten eines bestimmten Abstands erfasst werden bevor dieser das Display berührt. Sobald der Finger des Anwenders auf dem Display aufsitzt wird unter Nutzung der Elektrodensegmente 2 eine an sich bekannte Touchscreenfunktion geboten.

Es ist möglich, im Bereich des Displays weitere Elektroden vorzusehen, die beispielsweise nur der Unterstützung der Positionserfassung im "Non-Touch-Mode" dienen. Durch diese zusätzlichen Elektroden kann beispielsweise die Präsenzerfassung einer Hand bei einem größeren Abstand bewerkstelligt werden. Ein Wechsel in einen Betriebsmodus in welchem die Touch-Analyse Elektroden als Positionserfassungselektroden für berührungslose Positionserfassung verwendet werden erfolgt dann z.B. erst, wenn ein bestimmter Mindestabstand unterschritten ist. Die Durchführung einer Positionserfassung von Fingern bevor diese das Display berühren kann unterdrückt werden, sobald eine Berührung des Displays erkannt wurde. Weiterhin kann die Auswertung der Elektrodensegmente im Berührungsmodus unterdrückt werden, solange ein bestimmter Mindestabstand noch nicht unterschritten wird.

Der Fingerpositionserfassungsmodus ohne Kontaktierung (Non-Touch- oder GestIC-Modus) und der Fingerpositionserfassungsmodus mit Displayberührung (Touch-Modus) können durch einen Multiplexer, insbesondere Zeitmultiplexer jeweils angeschaltet werden. Der GestIC-Modus kann die Anwendung eines zur Auswahl der jeweiligen Elektrodengruppe vorgesehenen Group-Drivers beinhalten, wobei durch jenen Group-Driver festgelegt wird, welche Elektrodensegmentgruppe, oder ggf. sogar welche einzelnen Elektrodensegmente momentan zur Erfassung der Fingerposition im Non-Touchmodus herangezogen wird. Der Group-Driver kann die Informationen zur momentanen Elektrodensegmentgruppe an eine Kompensationsschaltung weiterleiten die als solche bestimmte Kennwerte oder Voreinstellungen und Bezugspegelwerte festlegt die bei der Auswertung der über die jeweilige Elektrodensegmentgruppe erfassten feldelektrischen Phänomene Berücksichtigung finden. Diese Kennwerte können insbesondere die Gesamtkapazität oder Normalerdung des momentan aktiven Elektrodensystems in unbeeinflusstem Zustand beschreiben und damit eine bestimmte Vorkalibrierung bewirken.

Die Schaltung zur temporären Aktivierung der Elektrodensegmentzeilen und Elektrodensegmentspalten, sowie zur Auswertung der über die aktivierten Elektrodensegmentgruppen detektierten feldelektrischen Umgebungszustände kann in vorteilhafter Weise in einem ASIC 10 implementiert sein, der vorzugsweise in unmittelbarer Nähe des Scheibenlayers 1 angeordnet, insbesondere an den Scheibenlayer 1 angebunden ist. Dieser ASIC 10 ist vorzugsweise derart ausgebildet, dass dieser neben der Erfassung der Fingerposition im Non-Touch-Modus auch die Aswertung im Touchmodus, d.h. die Touchscreenfunktionalität bietet. Dieser ASIC 10 ist vorzugsweise so ausgelegt, dass bestimmte Funktionen desselben durch Programmierung festgelegt werden können. Der ASIC kann so gestaltet sein, dass durch diesen festgelegt wird, welche Elektrodensegmentgruppen, insbesondere welche Elektrodensegmentzeilen Z1...Z5 und Elektrodensegmentspalten S1...S9 des Elektrodensegmentarrays für die Positionserfassung im Non-Touchmodus momentan herangezogen werden.

Der ASIC 10 selbst liefert die Signale bezüglich der X- und Y- Position sowie des Touchzustandes in der Art verbreiteter Touchscreen-Schaltungen. Zusätzlich liefert der ASIC 10 auch die Z-Position bzw. Signale die Rückschlüsse auf den Abstand des Fingers eines Anwenders von dem Display geben bevor dieses berührt wird. Im ASIC kann ein Hintergrundprogramm abgearbeitet werden dass eine bestimmte Vorauswertung der erfassten Positions- oder Bewegungsinformationen vornimmt. So können durch den ASIC insbesondere auch "Mausklick-Informationen" generiert werden. Der ASIC 10 nutzt die zur X- und Y- Positionserfassung im Touch-Modus vorgesehenen Elektrodensegmente 2 und wählt aus diesen phasenweise Elektrodensegmentgruppen Z1 ...Z5 und S1...S9. Diese Elektrodensegmentgruppen Z1...Z5 und S1...S9 werden an ein Auswertungssystem angebunden. Durch dieses Auswertungssystem kann der Abstand, d.h. die Z-Position des Fingers, oder der Hand eines Anwenders vom Display erfasst werden. Die Erfassung beruht hierbei auf einer Änderung der kapazitiven Koppelung gegen Erde (Ground), der Einkoppelung eines Potentiales, und/oder der Änderung der dielektrischen Eigenschaften der Umgebung der Elektrodengruppen infolge des Eindringens und Positionierens des Fingers oder der Hand in einem der Displayeinrichtung vorgelagerten Bereich. Die Beeinflussung der dielektrischen Eigenschaften der Umgebung der Elektrodensegmentgruppen Z1...Z5 und S1...S9 durch den Anwender kann über die temporär als Sensorelektroden betriebenen Elektrodengruppen durch verschiedene Messansätze erfasst werden. Ein typischer Messansatz besteht darin, dass beispielsweise die durch den Finger des Anwenders beeinflusste Koppelung der aktivierten Elektrodensegmentgruppe gegen Ground als analoger, d.h. innerhalb eines Bereiches variierender Pegel erfasst wird.

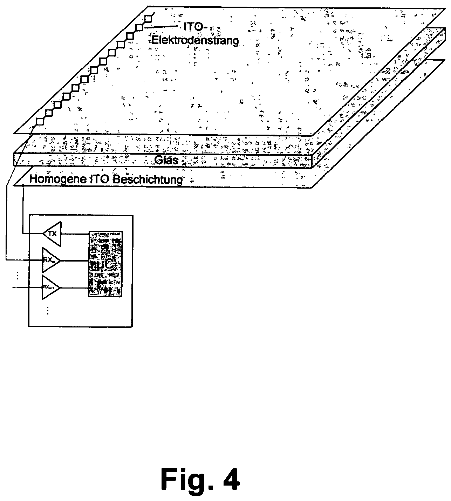

In Figur 4 ist eine weitere beispielhafte Ausführung einer erfindungsgemäßen Displayeinrichtung dargestellt. Die Schaltungsanordnung umfasst RX und TX Anschlüsse. Es ist möglich, z.B. durch entsprechenden Kanalmultiplex eine Vielzahl von Elektrodensegmentketten zur berührungslosen Positionsbestimmung heranzuziehen. Die Auswertung der an den jeweiligen Elektrodensegmentketten im Non-Touch-Modus anliegenden Signalpegel kann so abgewickelt werden, dass eine Multiobjekterkennung, d.h. z.B. die Erkennung von zwei Fingerspitzen und eine entsprechende Positionserkennung erfolgt.

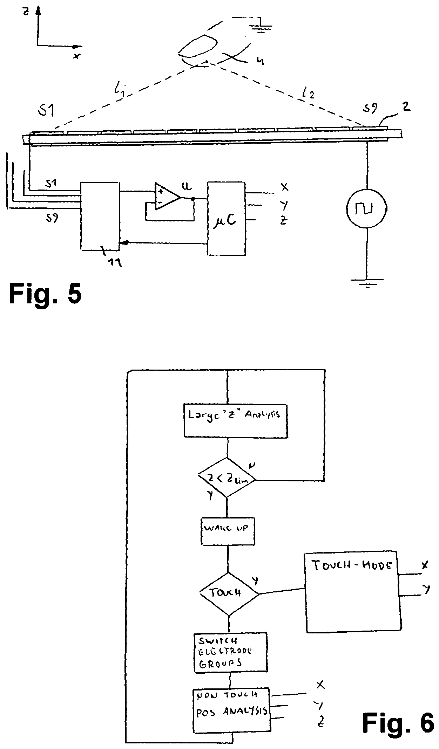

In Figur 5 ist in Form einer Skizze die erfindungsgemäße Displayeinrichtung und die hiermit abgewickelte Erfassung der Position eines Fingers eines Anwenders weiter veranschaulicht. Über die randnahen und zu Segmentspalten S1 und S9 zusammengefassten Elektrodensegmente 2 werden Signalpegel erfasst, die indikativ sind für die Abstände 11, 12 der Fingerkuppe 4 des Anwenders von der Displayeinrichtung. Aus diesen Signalpegeln wird dann die X-Position und der Z-Abstand errechnet. Die Pegelerfassung erfolgt über einen Groupdriver der sukzessive bestimmte Elektrodensegmentgruppen der Displayeinrichtung mit einer Auswertungsschaltung verbindet. Hier wird über den vereinfacht dargestellten Verstärker der Spannungspegel an der Elektrodengruppe hochohmig erfasst und dem µC zugeführt. Dieser umfasst einen ADC und errechnet aus den so gewonnenen digitalen Pegelinformationen die X-, Y- und Z-Koordinaten der Fingerkuppe 4. Die Displayeinrichtung ist auf ihrer den Elektrodensegmenten 2 abgewandten Rückseite mit einer ITO-Schicht versehen an welcher ein Rechtecksignal anliegt.

In Figur 6 ist ein vereinfachtes Flussdiagramm dargestellt. Wie hieraus ersichtlich, wird zunächst geprüft, ob ein bestimmter Mindestabstand unterschritten wird. Trifft dies zu, so wird das System aus einem einfachen Energiesparbetriebsmodus in einen Hauptbetriebszustand umgeschaltet. Wird ein Touchzustand festgestellt, so wird über das Elektrodensegmentarray eine Erfassung der Berührungsposition abgewickelt. Dieser Touch-Modus wird solange beibehalten, bis die Displayberührung unterbrochen wird. Sobald der Finger des Anwenders vom Display abgehoben ist, wird überprüft, ob noch ein bestimmter Abstandsschwellwert von z.B. 66 % Bildschirmdiagonale nicht überschritten wird. Wird dieser Abstandsschwellwert nicht überschritten arbeitet das Detektionssystem im Non-Touch-Modus in welchem sukzessive aktivierte Elektrodensegmentzeilen Z1... Z5 und Elektrodensegmentspalten S1... S9, oder nur die randnahen Elektrodensegmentgruppen, d.h. die Elektrodensegmentzeilen Z1 und Z5, sowie die Elektrodensegmentspalten S1 und S9 des Elektrodensegmentarrays hinsichtlich ihrer kapazitiven Koppelung gegen Ground untersucht werden. Aus den von der momentanen Fingerposition abhängigen Analogwerten können die X, Y und Z-Positionen des Fingers errechnet werden.

Die erfindungsgemäße Technik kann in vorteilhafter Weise durch ein Scheibenelement realisiert werden, das mit den an sich bekannten Touchscreen-Elektroden ausgestattet ist, wobei diese Touchscreen-Elektroden an eine erfindungsgemäße Auswertungsschaltung angebunden sind. Dieses Scheibenelement kann dann in ein Display eingebunden werden. Die Elektroden des Scheibenelementes sind vorzugsweise auf der dem Anwender zugewandten Seite nochmals von einer isolierenden transparenten Decklage abgedeckt, so dass auch im Touch-Modus keine galvanische Kontaktierung der Elektrodensegmente erfolgt.

Die erfindungsgemäße Technik eignet sich insbesondere für mobile Kommunikationsgeräte wie Mobiltelefone, e-books und Tablet-PC's.

Die Elektrodensegmente des Elektrodenarrays können in eine mehrschichtige transparente Scheibenstruktur eingebunden sein. Um eine besonders zuverlässige Isolierung der sich kreuzenden Überbrückungspunkte zwischen den einzelnen Elektrodensegmenten zu erreichen, können die Elektrodensegmente die jeweils Elektrodensegmentzeilen bilden auf einer ersten Seite eines transparenten und isolierenden Layers angeordnet sein und diejenigen Elektrodensegmente die zu Elektrodensegmentspalten verbunden sind- also quer zu den Zeilen verlaufen - auf einer abgewandten Seite dieses Layers, oder auch auf einem weiteren Layer angeordnet sein. Weiterhin kann auf der dem Anwender später abgewandten Seite dieser Sandwichstruktur eine im wesentlichen vollflächige Rückabschirmungslage ausgebildet sein. Diese Rückabschirmungslage kann insbesondere auch durch die sog. VCOM-Lage einer Flüssigkristallstruktur gebildet sein. Die vorliegende Erfindung richtet sich primär auf eine Displayeinrichtung die sowohl Touchscreenfunktionalitäten, als auch Non-Touch-Positionsanalyse Funktionalitäten bietet, wobei diese Funktionalitäten durch gemeinsam genutzte Elektrodensegmente realisiert werden. Die erfindungsgemäße Struktur zur kombinierten Erfassung von Fingerpositionen im Touch-Modus sowie auch im Non-Touchmodus kann auch in anderweitige Gerätschaften, insbesondere Möbel und Fahrzeuginnenausstattungen eingebunden werden um hier in einem räumlich begrenzten Bereich eine entsprechende Eingabezone, d.h. eine Eingabezone die auch Non-Touch Interaktionen ermöglicht, zu realisieren.

## Patentansprüche

1. Displayeinrichtung mit:
- einem transparenten Substrat (1), und
- einer ersten transparenten Elektrodenschicht, die auf einer oberen Seite des Substrats (1) angeordnet ist und einer zweiten transparenten Elektrodenschicht, die auf einer unteren Seite des Substrats (1) angeordnet ist,
- wobei die erste Elektrodenschicht ein Segmentarray bildet, welches in eine Vielzahl von Elektrodensegmenten (2) untergliedert ist und diese Elektrodensegmente (2) derart miteinander gekoppelt sind, dass eine Vielzahl von Elektrodengruppen (Z1..Z5; S1..S9) gebildet wird,
**gekennzeichnet durch**
- einer Kontrollschaltung (10) die derart ausgebildet ist, dass sie in einen ersten und in einem zweiten Betriebsmodus geschaltet werden kann, wobei im ersten Betriebsmodus die Elektrodensegmente (2) zur Berührungsdetektion genutzt werden und im zweiten Betriebsmodus der zweiten transparenten Elektrodenschicht ein Signal zur Erzeugung eines Wechselfeldes in einem der Displayeinrichtung vorgelagerten Bereich zugeführt wird und wenigstens zwei Elektrodengruppen (Z1..Z5; S1..S9) selektiert werden, welche zur Detektion einer berührungslose Positions- oder Bewegungserfassung eines Fingers des Anwenders in dem der Displayeinrichtung vorgelagerten Bereich genutzt werden.

2. Displayeinrichtung nach Anspruch 1, wobei die Elektrodengruppen eine Vielzahl von Elektrodenspalten (S1..9) und Elektrodenzeilen (Z1..Z5) umfassen.

3. Displayeinrichtung nach Anspruch 2, wobei eine Umschaltung zwischen dem ersten und zweiten Betriebsmodus durch eine Multiplexereinrichtung bewerkstelligt wird.

4. Displayeinrichtung nach Anspruch 3, wobei der erste Betriebsmodus beibehalten wird, solange eine Berührung detektiert wird.

5. Displayeinrichtung nach Anspruch 3 oder 4, wobei der zweite Betriebsmodus beibehalten wird, solange keine Berührung detektiert wird.

6. Displayeinrichtung nach wenigstens einem der Ansprüche 1 bis 5, wobei im zweiten Betriebsmodus zunächst eine grobe Annäherungsdetektion abgewickelt wird, und erst bei Erfassung eines hinreichend ausgeprägten Näherungszustandes eine sensiblere Positionsbestimmung abgewickelt wird.

7. Displayeinrichtung nach wenigstens einem der Ansprüche 1 bis 6, wobei im zweiten Betriebsmodus wechselnde Elektrodensegmentgruppen als Sensorelektroden fungieren.

8. Displayeinrichtung nach wenigstens einem der Ansprüche 1 bis 7, wobei im zweiten Betriebsmodus zur Ermittlung einer Y-Position eine Elektrodensegmentgruppe (Z1) aktiviert wird, die eine obere horizontale Segmentkette darstellt und/oder eine Elektrodensegmentgruppe (Z5) aktiviert wird, die eine untere horizontale Segmentkette darstellt.

9. Displayeinrichtung nach wenigstens einem der Ansprüche 1 bis 8, wobei im zweiten Betriebsmodus zur Ermittlung einer X-Position eine Elektrodensegmentgruppe aktiviert wird, die eine linke vertikale Segmentkette (Sl) darstellt.

10. Displayeinrichtung nach wenigstens einem der Ansprüche 1 bis 9, wobei im zweiten Betriebsmodus zur Ermittlung einer X-Position eine Elektrodensegmentgruppe aktiviert wird, die eine rechte vertikale Segmentkette (S9) darstellt.

11. Displayeinrichtung nach wenigstens einem der Ansprüche 1 bis 10, wobei im zweiten Betriebsmodus zur Ermittlung einer X- und Y-Position Signalwerte von den selektierten Elektrodengruppen, die zueinander quer ausgerichtet sind, insbesondere zueinander senkrecht stehenden Elektrodensegmentgruppen, ausgewertet werden.

12. Displayeinrichtung nach wenigstens einem der Ansprüche 1 bis 11, wobei die im zweiten Betriebsmodus herangezogenen Elektrodensegmentgruppen (Z1 ...Z5; S1 ...S9) adaptiv ausgewechselt werden, insbesondere sukzessive derart durchgewechselt werden, dass die jeweils aktive Elektrodensegmentgruppe (Z1 ...Z5; S 1 ...S9) in der Art einer laufenden Zeile oder laufenden Spalte über die Displayeinrichtung wandert.

13. Displayeinrichtung nach wenigstens einem der Ansprüche 1 bis 12, wobei im ersten Betriebsmodus jeweils zwei benachbarte Elektrodensegmentgruppen gebildet werden und die kapazitive Koppelung dieser beiden Elektrodensegmentgruppen erfasst wird, und aus dieser kapazitiven Koppelung eine Berührungsposition ermittelt wird.

14. Verfahren zur Generierung von Eingabesignalen im Zusammenhang mit der Bewegung eines Fingers eines Anwenders auf einer Displayeinrichtung gemäß einem der vorhergehenden Ansprüche, wobei
in einem ersten Betriebsmodus die Vielzahl der Elektrodensegmente (2) zur Berührungsdetektion genutzt werden, und
in einem zweiten Betriebsmodus der zweiten transparenten Elektrodenschicht ein Signal zur Erzeugung eines Wechselfeldes in einem der Touchpadkomponente vorgelagerten Bereich zugeführt wird und wenigstens zwei Elektrodengruppen (Z1..Z5; S1..S9) selektiert werden, welche zur Detektion einer berührungslosen Positions- oder Bewegungserfassung eines Fingers des Anwenders in dem der Displayeinrichtung vorgelagerten Bereich genutzt werden.

## Claims

1. A display device, comprising:
- a transparent substrate (1), and
- a first transparent electrode layer arranged on an upper side of the substrate (1) and a second transparent electrode layer arranged on a lower side of the substrate (1),
- wherein the first electrode layer forms a segment array, which is subdivided into a variety of electrode segments (2) and these electrode segments (2) are coupled to each other in such a way that a variety of electrode groups (Z1..Z5; S1..S9) is formed,
**characterized by**
- a control circuit (10), which is designed in such a way that it can be switched to a first and to a second operating mode, wherein in the first operating mode the electrode segments (2) are used for contact detection and in the second operating mode of the second transparent electrode layer a signal for generating an alternating field in an area in front of the display device is supplied and at least two electrode groups (Z1..Z5; S1..S9) are selected, which are used to detect a non-contact position or motion detection of a finger of the user in the area in front of the display device.

2. The display device according to claim 1, wherein the electrode groups comprise a variety of electrode columns (S1..9) and electrode lines (Z1..Z5).

3. The display device according to claim 2, wherein switching between the first and second operating modes is accomplished by a multiplexer device.

4. The display device according to claim 3, wherein the first operating mode is maintained as long as a touch is detected.

5. The display device according to claim 3 or 4, wherein the second operating mode is maintained as long as no touch is detected.

6. The display device according to at least one of claims 1 to 5, wherein in the second operating mode initially a rough approximation detection is processed, and only when a sufficiently pronounced approximation condition is detected a more sensitive position determination is processed.

7. The display device according to at least one of claims 1 to 6, wherein in the second operating mode varying electrode segment groups act as sensor electrodes.

8. The display device according to at least one of claims 1 to 7, wherein in the second operating mode to determine a Y position an electrode segment group (Z1) is activated, which represents an upper horizontal segment chain and / or an electrode segment group (Z5) is activated, which represents a lower horizontal segment chain.

9. The display device according to at least one of claims 1 to 8, wherein in the second operating mode to determine an X position an electrode segment group is activated, which represents a left vertical segment chain (S1).

10. The display device according to at least one of claims 1 to 9, wherein in the second operating mode to determine an X position an electrode segment group is activated, which represents a right vertical segment chain (S9).

11. The display device according to at least one of claims 1 to 10, wherein in the second operating mode to determine an X and Y position signal values of the selected electrode groups, which are aligned to each other transversely, in particular perpendicular electrode segment groups, are evaluated.

12. The display device according to at least one of claims 1 to 11, wherein the electrode segment groups used in the second operating mode (Z1 ...Z5; S1 ...S9) are exchanged adaptively, in particular are exchanged successively in such a way that the respective active electrode segment group (Z1 ...Z5; S 1 ...S9) shifts across the display device in the manner of a walking row or column.

13. The display device according to at least one of claims 1 to 12, wherein in the first operating mode two adjacent electrode segment groups are formed and the capacitive coupling of these two electrode segment groups is detected, and from this capacitive coupling a contact position is determined.

14. A method for generating input signals in connection with the movement of a finger of a user on a display device according to one of the preceding claims, wherein
in a first operating mode, the plurality of electrode segments (2) are used for contact detection, and
in a second operating mode of the second transparent electrode layer, a signal for the generation of an alternating field in an area in front of the touchpad component is supplied and at least two electrode groups (Z1..Z5; S1..S9) are selected, which are used to detect a contactless position or motion detection of a finger of the user in the area in front of the display device.

## Revendications

1. Dispositif d'affichage avec :
- un substrat (1) transparent, et
- une première couche d'électrodes transparente, qui est disposée sur une face supérieure du substrat (1) et une deuxième couche d'électrodes transparente, qui est disposée sur une face inférieure du substrat (1),
- dans lequel la première couche d'électrodes forme un réseau de segments, lequel est subdivisé en une pluralité de segments d'électrodes (2) et ces segments d'électrodes (2) sont couplés les uns aux autres de telle sorte qu'une pluralité de groupes d'électrodes (Z1..Z5 ; S1..S9) est formée,
**caractérisé par**
- un circuit de contrôle (10) qui est réalisé de telle sorte qu'il peut être commuté dans un premier et dans un deuxième mode de fonctionnement, dans lequel dans le premier mode de fonctionnement les segments d'électrodes (2) sont utilisés pour la détection d'un contact et dans le deuxième mode de fonctionnement un signal pour la génération d'un champ alternatif dans une zone située en amont du dispositif d'affichage est amené à la deuxième couche d'électrodes transparente et au moins deux groupes d'électrodes (Z1..Z5 ; S1..S9) sont sélectionnés, lesquels sont utilisés pour la détection d'une acquisition de position ou de mouvement sans contact d'un doigt de l'utilisateur dans la zone située en amont du dispositif d'affichage.

2. Dispositif d'affichage selon la revendication 1, dans lequel les groupes d'électrodes comprennent une pluralité de colonnes d'électrodes (S1..9) et de lignes d'électrodes (Z1..Z5).

3. Dispositif d'affichage selon la revendication 2, dans lequel un basculement entre le premier et deuxième mode de fonctionnement est réalisé par un dispositif multiplexeur.

4. Dispositif d'affichage selon la revendication 3, dans lequel le premier mode de fonctionnement est conservé tant qu'un contact est détecté.

5. Dispositif d'affichage selon la revendication 3 ou 4, dans lequel le deuxième mode de fonctionnement est conservé tant qu'aucun contact n'est détecté.

6. Dispositif d'affichage selon au moins l'une des revendications 1 à 5, dans lequel dans le deuxième mode de fonctionnement une détection d'approche grossière est tout d'abord exécutée, et ce n'est que lors de l'acquisition d'un état de proximité suffisamment marqué qu'une détermination de position plus sensible est exécutée.

7. Dispositif d'affichage selon au moins l'une des revendications 1 à 6, dans lequel dans le deuxième mode de fonctionnement des groupes de segments d'électrodes alternatifs font fonction d'électrodes de capteur.

8. Dispositif d'affichage selon au moins l'une des revendications 1 à 7, dans lequel dans le deuxième mode de fonctionnement pour la détermination d'une position Y un groupe de segments d'électrodes (Z1) est activé, qui représente une chaîne de segments horizontale supérieure et/ou un groupe de segments d'électrodes (Z5) est activé, qui représente une chaîne de segments horizontale inférieure.

9. Dispositif d'affichage selon au moins l'une des revendications 1 à 8, dans lequel dans le deuxième mode de fonctionnement pour la détermination d'une position X un groupe de segments d'électrodes est activé, qui représente une chaîne de segments verticale gauche (S1).

10. Dispositif d'affichage selon au moins l'une des revendications 1 à 9, dans lequel dans le deuxième mode de fonctionnement pour la détermination d'une position X un groupe de segments d'électrodes est activé, qui représente une chaîne de segments verticale droite (S9).

11. Dispositif d'affichage selon au moins l'une des revendications 1 à 10, dans lequel dans le deuxième mode de fonctionnement pour la détermination d'une position X et Y des valeurs de signal des groupes d'électrodes sélectionnés, qui sont orientés transversalement les uns par rapport aux autres, en particulier des groupes de segments d'électrodes perpendiculaires les uns aux autres, sont évaluées

12. Dispositif d'affichage selon au moins l'une des revendications 1 à 11, dans lequel les groupes de segments d'électrodes (Z1 ...Z5 ; S1 ...S9) utilisés dans le deuxième mode de fonctionnement sont remplacés de manière adaptative, en particulier sont échangés de manière successive, de telle sorte que le groupe de segments d'électrodes (Z1 ...Z5 ; S1 ...S9) respectivement actif se déplace sur le dispositif d'affichage à la façon d'une ligne en mouvement ou colonne en mouvement.

13. Dispositif d'affichage selon au moins l'une des revendications 1 à 12, dans lequel dans le premier mode de fonctionnement respectivement deux groupes de segments d'électrodes voisins sont formés et le couplage capacitif de ces deux groupes de segments d'électrodes est acquis, et une position de contact est déterminée à partir de ce couplage capacitif.

14. Procédé pour la génération de signaux d'entrée en relation avec le mouvement d'un doigt d'un utilisateur sur un dispositif d'affichage selon l'une quelconque des revendications précédentes, dans lequel
dans un premier mode de fonctionnement la pluralité des groupes de segments d'électrodes (2) sont utilisés pour la détection de contact, et
dans un deuxième mode de fonctionnement un signal pour la génération d'un champ alternatif dans une zone située en amont du composant de pavé tactile est amené à la deuxième couche d'électrodes transparente et au moins deux groupes d'électrodes (Z1..Z5 ; S1..S9) sont sélectionnés, lesquels sont utilisés pour la détection d'une acquisition de position ou de mouvement sans contact d'un doigt de l'utilisateur dans la zone située en amont du dispositif d'affichage.
